# EUROPÄISCHE PATENTANMELDUNG

(11) **EP 1 048 396 A2**
(43) Veröffentlichungstag der Anmeldung: **02.11.2000**
(21) Anmeldenummer: 00105266.1
(22) Anmeldetag: 14.03.2000
(51) Int. Cl.: B23Q 3/155, B23Q 3/157

(54) **Werkzeugmaschine mit schwenkbarem Maschinenmagazin**

(30) Priorität: 29.04.1999 DE 19919446
(71) Anmelder: CHIRON-WERKE GMBH & CO. KG, 78532 Tuttlingen (DE)
(72) Erfinder: Winkler, Hans-Henning, Dr., 78532 Tuttlingen (DE); Haninger, Rudolf, 78606 Seitingen (DE)
(74) Vertreter: Otten, Hajo, Dr.-Ing.

(57) **Zusammenfassung**

Eine Werkzeugmaschine (10) weist einen Werkstücktisch (11) zum Aufspannen von zu bearbeitenden Werkstücken (14) auf. Ferner ist eine in einem Arbeitsbereich relativ zu dem Werkstücktisch (11) verfahrbare Spindel (20) vorgesehen, in die Werkzeuge (23) für die Bearbeitung der Werkstücke (14) einwechselbar sind. Die Werkzeuge (23) sind in einem Maschinenmagazin (22) gehalten, das zum Werkzeugwechsel in den Arbeitsbereich hinein bewegbar ist, so daß ein in dem Maschinenmagazin (22) gehaltenes Werkzeug (23) durch die Spindel (20) entnehmbar ist .

## Beschreibung

Die vorliegende Erfindung betrifft eine Werkzeugmaschine mit einem Werkstücktisch zum Aufspannen von zu bearbeitenden Werkstücken, einer in einem Arbeitsbereich relativ zu dem Werkstücktisch verfahrbaren Spindel, in die Werkzeuge für die Bearbeitung der Werkstücke einwechselbar sind, und einem Maschinenmagazin, in dem in die Spindel einwechselbare Werkzeuge gehalten sind.

Eine derartige Werkzeugmaschine ist aus der DE 197 24 635 A1 bekannt.

Die bekannte Werkzeugmaschine ist eine sogenannte Fahrständermaschine mit feststehendem Werkstücktisch und relativ zu diesem in einem Arbeitsbereich in drei Koordinatenrichtungen verfahrbaren Spindelstock. In dem Spindelstock ist drehbar eine Spindel gelagert, die eine Aufnahme zum Einspannen von Werkzeugen aufweist, mit denen auf dem Werkstücktisch aufgespannte Werkstücke bearbeitet werden.

Um die Spindel herum sind an dem Spindelstock Werkzeugwechsler angeordnet, von denen jeder jeweils ein Werkzeug hält, das wahlweise in die Spindel eingewechselt wird. Auf diese Weise wird ein Maschinenmagazin gebildet, in dem so viele Werkzeuge gespeichert werden können, wie Werkzeugwechsler vorhanden sind.

Um einen schnellen Werkzeugwechsel zu ermöglichen, befinden sich die Werkzeuge in ihrer Magazinposition in der Nähe der Werkzeugaufnahme der Spindel und sind ferner so angeordnet, daß sie den Bewegungen der Spindel folgen.

Bei derartigen Werkzeugmaschinen wird häufig mit einer sogenannten Innenkühlung gearbeitet, bei der innen durch die Spindel und durch das jeweils in die Spindel aufgenommene Werkzeug Kühlschmiermittel hindurchgeleitet wird, um das gerade in Bearbeitung befindliche Werkstück zu kühlen und entstehende Späne abzuspülen. Dieses Abspülen erfolgt häufig mit sehr hohem Druck, um für eine effiziente Kühlung und Reinigung des Werkstückes zu sorgen. Dabei spritzt Kühlmittel von dem Werkstück nach oben und verteilt auf diese Weise auch die so abgespülten Späne auf unerwünschte Flächen in der Werkzeugmaschine. Aus diesem Grund ist der Arbeitsbereich derartiger Werkzeugmaschinen nicht nur nach außen gekapselt sondern auch im Inneren so abgedeckt, daß das Kühlschmiermittel sowie die Späne schnell und zuverlässig in eine Spänewanne abgeführt werden.

Beim Arbeiten mit der bekannten Werkzeugmaschine hat sich nun herausgestellt, daß es insbesondere ein Problem mit der Verschmutzung der Werkzeugwechsler sowie der in Magazinposition gehaltenen Werkzeuge gibt, denn das Maschinenmagazin ist nach unten offen, so daß Kühlschmiermittel und Späne insbesondere bei einer Innenkühlung mit hohem Druck nach oben spritzen und für eine entsprechende Verschmutzung sorgen können.

Diese Verschmutzung ist mit einer ganzen Reihe von Nachteilen verbunden. Zum einen tropfen Kühlschmiermittel und Späne aus dem Maschinenmagazin wieder auf das Werkstück, so daß trotz eines Abblasens die Werkstücke verschmutzt aus dem Arbeitsbereich herausgenommen werden müssen. Ein weiterer Nachteil besteht darin, daß das Kühlschmiermittel sowie die Späne an den in Magazinposition befindlichen Werkzeugen festkleben können. Dies bedeutet, daß "verdreckte" Werkzeuge zum Einsatz kommen können, was z.B. infolge ungenauer Einspannung des Werkzeuges in die Spindel oder aber durch die Spanabhebung behindernde Späne nachteilige Auswirkungen auf die Bearbeitungsgenauigkeit haben kann. Ein weiterer Nachteil besteht darin, daß beim Umrüsten der bekannten Werkzeugmaschine verschmutzte Werkzeuge entnommen werden, die zunächst gereinigt werden müssen, bevor sie für eine spätere Wiederverwendung zwischengelagert werden.

Die bekannte Werkzeugmaschine weist ferner ein externes Werkzeugmagazin auf, das innerhalb der Verkleidung angeordnet ist und dazu dient, die Zahl der verfügbaren Werkzeuge zu erhöhen.

Zu diesem Zweck ist dem externen Werkzeugmagazin eine Übergabevorrichtung zugeordnet, die ein Werkzeug aus dem externen Werkzeugmagazin entnimmt und in den Arbeitsbereich unter die Spindel schwenkt. Dort fährt die Spindel das einzuwechselnde Werkzeug an, woraufhin dann die Greiferhand öffnet, in der das Werkzeug bisher gehalten wurde.

Wegen der schwenkbaren Übergabevorrichtung, die für das Einwechseln von Werkzeugen aus dem externen Werkzeugmagazin in die Spindel benötigt wird, ist diese zusätzliche Bereitstellung von Werkzeugen konstruktiv sehr aufwendig. Ein weiterer Nachteil besteht darin, daß nur ein sehr langsamer Werkzeugwechsel möglich ist, so daß auf das externe Werkzeugmagazin nur in Ausnahmefällen zurückgegriffen wird.

Vor diesem Hintergrund ist es Aufgabe der vorliegenden Erfindung, die eingangs genannte Werkzeugmaschine derart weiterzubilden, daß auf konstruktiv einfache Weise eine Verschmutzung der Werkzeuge in dem Maschinenmagazin vermieden wird, wobei dennoch ein schneller Werkzeugwechsel möglich sein soll.

Bei der eingangs genannten Werkzeugmaschine wird diese Aufgabe erfindungsgemäß dadurch gelöst, daß das Maschinenmagazin zum Werkzeugwechsel in den Arbeitsbereich hinein bewegbar ist, so daß ein in dem Maschinenmagazin gehaltenes Werkzeug durch die Spindel entnehmbar ist.

Die der Erfindung zugrunde liegende Aufgabe wird auf diese Weise vollkommen gelöst.

Die Erfinder der vorliegenden Anmeldung haben nämlich erkannt, daß statt des um die Spindel herum angeordneten Maschinenmagazines auch ein Maschinenmagazin verwendet werden kann, das außerhalb des Arbeitsbereiches der Spindel angeordnet ist und nur zum Werkzeugwechsel in diesen hinein bewegt wird. Die Spindel fährt dann ein in dem Maschinenmagazin gehaltenes Werkzeug an und entnimmt es im "Pick-up-Betrieb". Während die Spindel dann wieder ihre Arbeitsposition anfährt, wird das Maschinenmagazin aus dem Arbeitsbereich heraus bewegt. Außerhalb des Arbeitsbereiches besteht nur eine geringe Gefahr, daß die im Maschinenmagazin vorrätig gehaltenen Werkzeuge durch Kühlschmiermittel und/oder Späne verschmutzen, so daß das Verschmutzungsproblem auf diese Weise gelöst werden konnte.

Diese Maßnahme hat darüber hinaus auch konstruktive Vorteile, denn auf die verschiedenen, um die Spindel herum angeordneten Werkzeugwechsler kann verzichtet werden. Auch eine Übergabevorrichtung, wie bei dem externen Maschinenmagazin aus dem Stand der Technik erforderlich, wird hier nicht benötigt; die Spindel arbeitet unmittelbar mit dem Maschinenmagazin zusammen. Selbstverständlich können zusätzlich zu dem Maschinenmagazin für "Pick-up-Betrieb" noch Werkzeugwechsler vorgesehen sein, die um den Spindelstock herum angeordnet sind.

In einer Weiterbildung ist es bevorzugt, wenn das Maschinenmagazin mit einem eigenen Gehäuse versehen ist, das eine Ladeöffnung aufweist, durch die hindurch die Spindel ein Werkzeug aufnehmen und ablegen kann, wobei vorzugsweise ein Deckel für die Ladeöffnung vorgesehen ist, der die Ladeöffnung beim Hineinfahren in den Arbeitsbereich vorzugsweise automatisch freigibt.

Bei dieser Maßnahme ist von Vorteil, daß das innerhalb der Verkleidung der Werkzeugmaschine angeordnete Maschinenmagazin die in ihm gehaltenen Werkzeuge durch das eigene Gehäuse effizient vor Verschmutzung schützt, selbst wenn das Maschinenmagazin in unmittelbarer Nähe des Arbeitsbereiches der Spindel angeordnet ist. Neben einer noch besseren Lösung des Verschmutzungsproblemes liegt ein weiterer Vorteil hier darin, daß nur ein kurzer Verfahrweg erforderlich ist, um das Werkzeugmagazin in den Arbeitsbereich hinein zu bewegen. Trotz des geringen Abstandes zwischen dem Arbeitsbereich und dem Maschinenmagazin besteht wegen des Gehäuses dennoch keine Gefahr, daß die Werkzeuge verschmutzen. Durch den für die Ladeöffnung vorgesehenen Deckel ergibt sich in der Ruhestellung des Maschinenmagazines ein sehr effizienter Schutz vor Verschmutzung. Der Deckel kann dabei z.B. beim Anfahren durch die Spindel zur Seite gedrückt werden, wobei ein konstruktiver Vorteil darin besteht, wenn der Deckel beim Hineinfahren des Maschinenmagazines in den Arbeitsbereich automatisch von der Ladeöffnung weg bewegt wird. Dies bedeutet nämlich, daß die Ladeöffnung bereits freigegeben ist, wenn das Maschinenmagazin seine Wechselposition erreicht hat, so daß die Spindel dann unmittelbar ein Werkzeug entnehmen bzw. ablegen kann, ohne daß Zeit für das Öffnen des Deckels verlorengeht.

Dabei ist es weiter bevorzugt, wenn der Deckel verschiebbar an dem Gehäuse angeordnet und gelenkig mit einem Ende eines Stabes verbunden ist, der an seinem anderen Ende gelenkig mit einem Gestell der Werkzeugmaschine verbunden ist, wobei vorzugsweise an dem Deckel ein Bolzen angeordnet ist, der in einer Kulisse läuft.

Bei dieser Maßnahme ist von Vorteil, daß kein eigener Antrieb für das Verschieben des Deckels erforderlich ist. Beim Hineinbewegen des Werkzeugmagazines in den Arbeitsbereich zieht vielmehr der Stab den Deckel zurück, wobei durch die bevorzugte Führung eines Bolzens in einer Kulisse dafür gesorgt wird, daß sich der Deckel beim Verfahren des Maschinenmagazines nicht an dessen Gehäuse verklemmen kann. Diese Maßnahme ist also zum einen konstruktiv zum Vorteil, zum anderen ermöglicht sie einen schnellen Werkzeugwechsel, denn der Deckel wird sozusagen beim Hineinfahren des Maschinenmagazines von der Ladeöffnung weggezogen, wobei der geschwindigkeitslimitierende Schritt die Bewegung des Maschinenmagazines und nicht das Öffnen des Deckels ist.

Allgemein ist es bevorzugt, wenn die Werkzeuge in dem Maschinenmagazin längs einer in sich geschlossenen Bahn mittels eines eigenen Antriebes verfahrbar sind.

Hier ist von Vorteil, daß die Spindel das Maschinenmagazin immer an derselben Stelle anfahren kann, das Positionieren eines neuen Werkzeuges und/oder eines Leerplatzes zum Ablegen eines auszutauschenden Werkzeuges erfolgt über den Antrieb des Maschinenmagazines. Das Verfahren der Werkzeuge in dem Maschinenmagazin kann dabei sehr viel schneller erfolgen, als das Verfahren der Spindel zwischen einem Leerplatz zum Ablegen des auszuwechselnden Werkzeuges und einem einzuwechselnden Werkzeug, so daß sich auf diese Weise der Werkzeugwechsel beschleunigen läßt. Ein weiterer Vorteil besteht darin, daß das Gehäuse des Maschinenmagazines nur eine sehr kleine Ladeöffnung aufweisen muß, durch die gerade ein Werkzeug ein- bzw. ausgewechselt werden kann. Alle anderen Werkzeuge des Maschinenmagazines können auch dann innerhalb des Gehäuses verbleiben, wenn das Maschinenmagazin in den Arbeitsbereich hinein bewegt wird. Auf diese Weise wird verhindert, daß von Teilen der Werkzeugmaschine herabtropfendes Kühlschmiermittel oder herabfallende Späne während des Werkzeugwechsels auf Werkzeuge des Maschinenmagazins gelangen können. Eine gewisse Verschmutzungsgefahr besteht zwar durch die Ladeöffnung hindurch, hierüber ist jedoch während des Werkzeugwechsels die Spindel positioniert, die die Ladeöffnung schützt.

Allgemein ist es bevorzugt, wenn das Maschinenmagazin schwenkbar an einem Gestell der Werkzeugmaschine gelagert und mit einem Schwenkantrieb, vorzugsweise einer Kolben-Zylinder-Einheit, versehen ist.

Bei dieser Maßnahme ist von Vorteil, daß nicht das gesamte Maschinenmagazin, sondern sozusagen nur dessen vorderer Bereich in den Arbeitsbereich hinein geschwenkt werden muß, was sich auf sehr schnelle Weise z.B. mittels einer Kolben-Zylinder-Einheit erreichen läßt, die zwischen zwei Endanschlägen hin- und herfährt. Diese Maßnahme ist also konstruktiv von Vorteil. Ein weiterer Vorteil dieser Maßnahme besteht darin, daß nur einige wenige Werkzeuge in dem Maschinenmagazin in den Arbeitsbereich der Spindel gelangen und dort einer Verschmutzungsgefahr ausgesetzt sind.

Weiter ist es bevorzugt, wenn das Maschinenmagazin ein angetriebenes Endlosband aufweist, an dem Träger zur Aufnahme der Werkzeuge angeordnet sind, wobei vorzugsweise jeder Träger zwei im Abstand parallel zueinander verlaufende Ausleger aufweist, an denen eine Vertiefung vorgesehen ist, die an eine Außenkontur des Werkzeugs so angepaßt ist, daß dieses nach dem Ablegen nicht seitlich herausfallen kann.

Auch diese Maßnahme ist konstruktiv von Vorteil; die Spindel muß zum Ablegen eines Werkzeuges dieses lediglich seitlich zwischen die beiden Ausleger fahren und dann nach unten ablegen. Diese Manipulationen sind sehr schnell zu bewerkstelligen, so daß auch hierdurch ein schneller Werkzeugwechsel möglich wird. Ein weiterer Vorteil besteht darin, daß an den Trägern keine Federelemente oder ähnliches vorgesehen sein müssen, um die Werkzeuge an dem Träger festzuhalten. Auf diese Weise wird für einen einfachen Aufbau des Maschinenmagazins gesorgt.

Dabei ist es bevorzugt, wenn die Träger nach außen über das Endlosband vorstehen und die Werkzeuge in einem Abstand zu dem Endlosband halten, wobei vorzugsweise an einem kreisbogenförmigen Abschnitt des Endlosbandes eine Wechselposition vorgesehen ist, in der ein Werkzeug durch die Spindel entnehmbar ist.

Bei dieser Maßnahme ist von Vorteil, daß sich der Abstand zwischen benachbarten Werkzeugen aus kinematischen Gründen im Bereich des kreisbogenförmigen Abschnittes erhöht, so daß zwischen benachbarten Werkzeugen so viel Platz ist, daß die Spindel von außen heranfahren und ein Werkzeug ablegen bzw. entnehmen kann. Damit ist es nicht erforderlich, an dem Maschinenmagazin eine Übergabevorrichtung vorzusehen, die ein zu wechselndes Werkzeug so weit aus dem Maschinenmagazin herausfährt, daß es dort durch die Spindel aufgenommen werden kann.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist in der Zeichnung dargestellt und wird in der nachfolgenden Beschreibung näher erläutert. Es zeigen:
- Fig. 1: eine neue Werkzeugmaschine in schematischer Seitenansicht;
- Fig. 2: eine Draufsicht auf den Werkstücktisch der Werkzeugmaschine aus Fig. 1;
- Fig. 3: ein in dem Maschinenmagazin aus den Figuren 1 und 2 gehaltenes Werkzeug sowie einen dafür vorgesehenen Träger in Seitenansicht und Draufsicht;
- Fig. 4: eine Draufsicht auf ein Maschinenmagazin mit Gehäuse und geschlossenem Deckel;
- Fig. 5: einen Schnitt durch das Maschinenmagazin aus Fig. 4 längs der Linie V-V aus Fig. 4;
- Fig. 6: das Maschinenmagazin aus Fig. 4, jedoch mit geöffnetem Deckel; und
- Fig. 7: eine schematische Draufsicht auf das Maschinenmagazin im Bereich der Wechselposition.

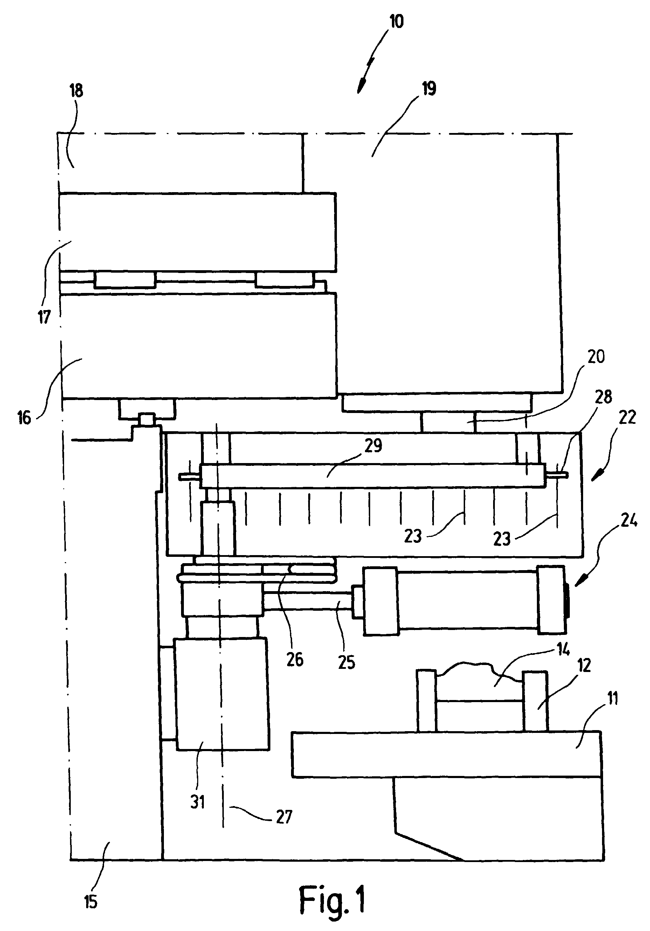

In Fig. 1 ist mit 10 eine neue Werkzeugmaschine bezeichnet, die einen Werkstücktisch 11 umfaßt, auf dem in einer Vorrichtung 12 ein zu bearbeitendes Werkstück 14 aufgespannt ist.

Die Werkzeugmaschine 10 umfaßt ein Gestell 15, an dem ein X-Schlitten 16 verschiebbar angeordnet ist. Auf dem X-Schlitten 16 ist quer zur X-Richtung ein Y-Schlitten 17 gelagert, der seinerseits einen Z-Schlitten 18 trägt, an dem ein Spindelkopf 19 befestigt ist, der eine bei 20 angedeutete Spindel trägt. Auf diese Weise ist die Spindel 20 in drei zueinander orthogonalen Koordinatenrichtungen gegenüber dem Werkstück 14 verfahrbar.

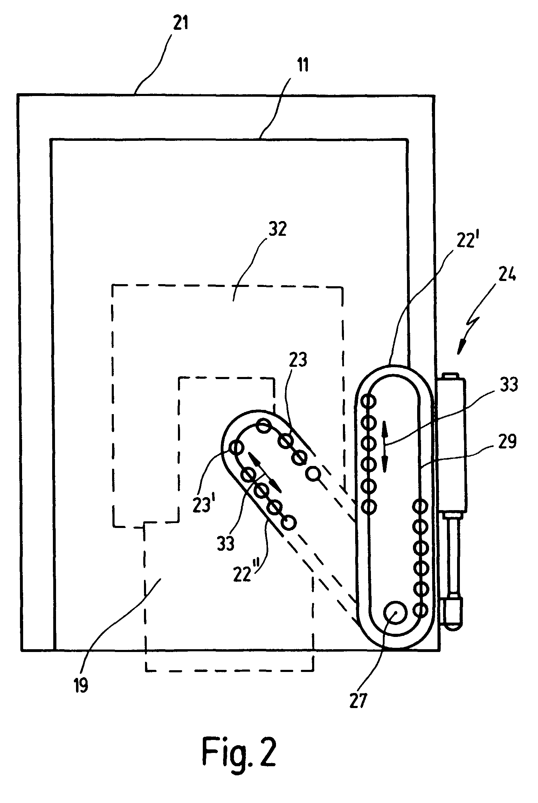

An dem Gestell 15 ist innerhalb einer in Fig. 2 angedeuteten Verkleidung 21 ferner ein Maschinenmagazin 22 gelagert, in dem bei 23 angedeutete Werkzeuge gehalten sind, die auf noch zu beschreibende Weise in die Spindel 20 eingewechselt werden können.

Dem Maschinenmagazin 22 ist als Schwenkantrieb eine Kolben-Zylinder-Einheit 24 zugeordnet, deren Kolbenstange 25 auf einen Kniehebelmechanismus 26 einwirkt. Beim Verfahren der Kolbenstange 25 wird auf diese Weise das Maschinenmagazin 22 um eine Schwenkachse 27 quer zur Zeichenebene der Fig. 1 verschwenkt und gelangt dabei entweder unter die Spindel 20 oder aus dem Bereich der Spindel 20 heraus.

Die Werkzeuge 23 sind in dem Maschinenmagazin 22 in Trägern 28 gehalten, die an einer Endloskette 29 angeordnet sind, die über einen Drehantrieb 31 verfahren werden kann. Der Drehantrieb 31 ist vorzugsweise ein Servoantrieb, über den die Werkzeuge 23 in dem Maschinenmagazin 22 exakt positioniert werden können. Im Gegensatz dazu arbeitet die Kolben-Zylinder-Einheit 24 zwischen zwei Endanschlägen und verschwenkt das Maschinenmagazin 22 zwischen zwei Positionen, die in Fig. 2 besser zu erkennen sind.

Fig. 2 ist eine Draufsicht auf den Werkstücktisch 11 und zeigt gestrichelt die Kontur des Spindelkopfes 19, der relativ gegenüber dem Werkstücktisch 11 derart verfahrbar ist, daß er alle Punkte in einem gestrichelt angedeuteten Arbeitsbereich 32 mit einem von der in Fig. 2 nicht gezeigten Spindel gehaltenen Werkzeug anfahren kann.

In Fig. 2 ist bei 22' das Maschinenmagazin 22 in seiner Ruheposition gezeigt, während es bei 22'' in seiner Wechselposition gezeigt ist, in der sich ein Werkzeug 23' genau unterhalb der Spindel 20 befindet. Die Spindel 20 kann dieses Werkzeug 23' jetzt entnehmen, woraufhin das Maschinenmagazin 22 in seine Ruheposition 22' zurückschwenkt und das in Fig. 2 nicht zu erkennende Werkstück 14 bearbeitet wird.

Danach wird das Maschinenmagazin 22 in seine Wechselposition 22' geschwenkt, und die Spindel 20 legt das Werkzeug 23' wieder in dem verbliebenen Leerplatz ab. Dann wird über den Drehantrieb 31 aus Fig. 1 die Endloskette 29 so lange verfahren, bis an der Position des Werkzeuges 23' ein neues Werkzeug zu liegen kommt, das nunmehr von der Spindel 20 aufgenommen wird.

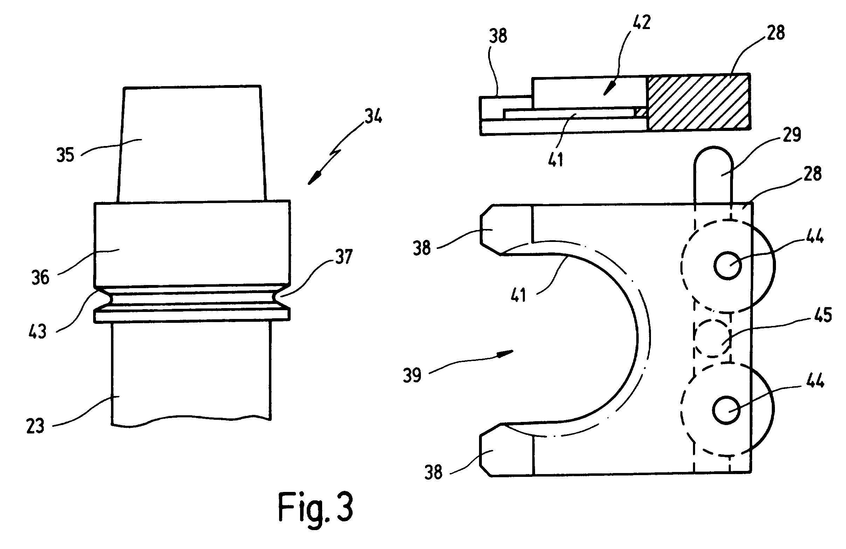

Wie bei Werkzeugmaschinen üblich, sind die Werkzeuge 23 in einen genormten Werkzeughalter 34 eingespannt, der in Fig. 3 links dargestellt ist. Der Werkzeughalter 34 umfaßt einen Kegelschaft 35, über den er in die Spindel 20 eingespannt wird, sowie einen Bund 36, an dem eine Greifernut 37 vorgesehen ist, in die beim Stand der Technik ein Greifer eines Werkzeugwechslers eingreift.

Diese Greifernut 37 wird nun verwendet, um den Werkzeughalter 34 an dem in Fig. 3 rechts gezeigten Träger 28 zu halten. In Fig. 3 rechts oben ist der Träger 28 im Längsschnitt und in Fig. 3 rechts unten in der Draufsicht dargestellt.

Es ist zu erkennen, daß der Träger zwei im Abstand parallel zueinander verlaufende Ausleger 38 aufweist, die zwischen sich eine Öffnung 39 begrenzen, in die der Werkzeughalter 34 eingeschoben werden kann.

Innerhalb der Öffnung 39 verläuft ein bei 41 angedeuteter Steg, durch den eine Art Vertiefung 42 gebildet wird, die an eine bei 43 angedeutete Außenkontur in der Greifernut 37 angepaßt ist.

Die Abmaße sind dabei so getroffen, daß die Greifernut 37 gerade in die Öffnung 39 einschiebbar ist, und daß beim Absenken des Werkzeughalters 34 die obere Fase (Außenkontur 43) an der Greifernut 37 in der Vertiefung 42 zu liegen kommt. Auf diese Weise wird der Werkzeughalter 34 daran gehindert, in Fig. 3 nach links aus der Öffnung 39 herauszufallen, wenn die Endloskette 29 in Fig. 2 längs des Pfeiles 33 bewegt wird.

In Fig. 3 ist noch zu erkennen, daß der Träger 28 über Bolzen 44 an Kettengliedern 45 der Endloskette 29 befestigt ist. Durch den Einsatz einer Endloskette 29 ist es möglich, die so gehaltenen Träger 28 auf der in Fig. 2 zu erkennenden ovalen Bahn zu verfahren.

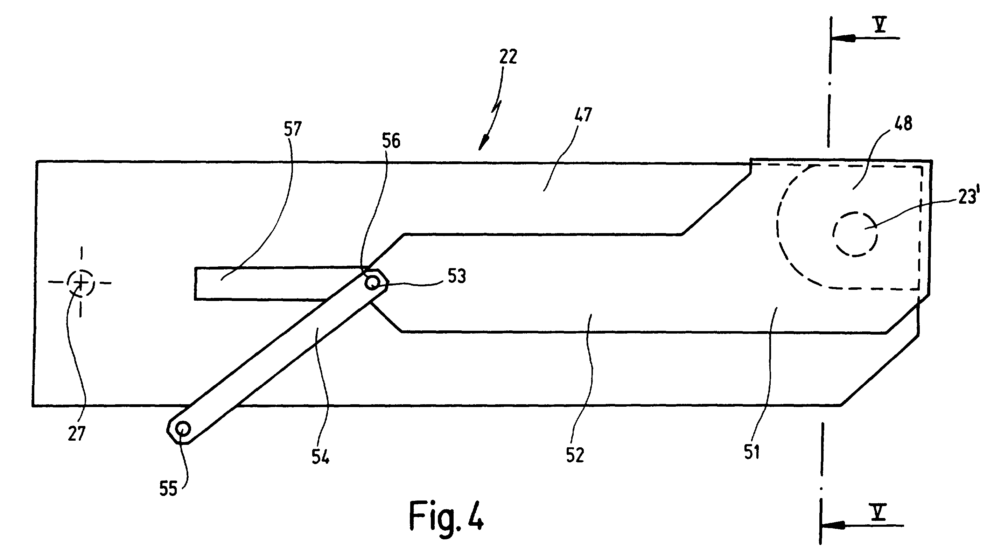

Zurückkehrend zu Fig. 2 ist noch anzumerken, daß sich das Maschinenmagazin 22 in seiner Ruheposition 22' neben dem Arbeitsbereich 32 der Spindel 20 befindet, so daß nur eine geringe Gefahr besteht, daß die Werkzeuge 23 durch herumspritzendes Kühlschmiermittel verschmutzt werden. Um die Werkzeuge 23 noch effizienter zu schützen, ist das Maschinenmagazin 22 mit einem eigenen Gehäuse 47 versehen, wie es in der Draufsicht der Fig. 4 zu erkennen ist. In Fig. 4 ist ferner die Schwenkachse 27 angedeutet, um die das Maschinenmagazin 22 so verschwenkt werden kann, wie dies in Fig. 2 gezeigt ist.

Das Gehäuse 47 ist ein allseits geschlossener Blechkasten, der lediglich eine Ladeöffnung 48 nach oben und zur Seite freigibt, durch die hindurch ein Werkzeug 23' ausgewechselt werden kann, wie dies anhand der Fig. 2 bereits beschrieben wurde.

In der in Fig. 4 gezeigten Ruheposition 22' ist die Ladeöffnung 48 durch einen Deckel 51 verschlossen, der verschiebbar auf dem Gehäuse 47 angeordnet ist. Der Deckel 51 ist mit einem Ausleger 52 versehen, der bei 53 gelenkig mit einem ersten Ende eines Stabes 54 verbunden ist, der an seinem anderen Ende bei 55 gelenkig an dem Werkstücktisch oder dem Gestell 15 befestigt ist. In dem Gelenk 53 sitzt ein Bolzen 56, der in einer Kulisse 57 läuft, die in dem Gehäuse 47 vorgesehen ist.

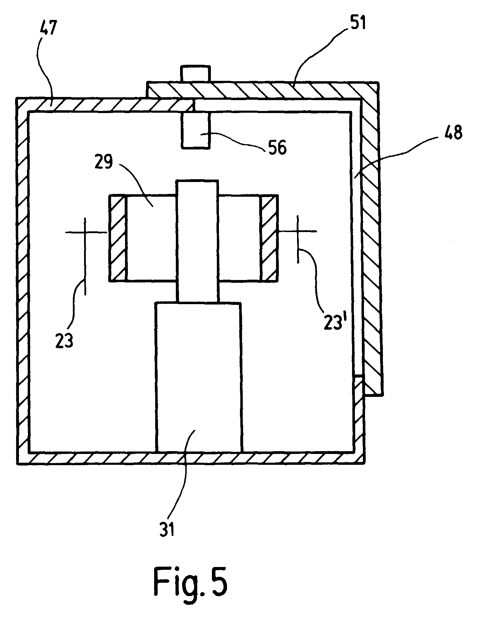

In Fig. 5 ist ein Schnitt durch das Gehäuse 47 längs der Linie V-V aus Fig. 4 gezeigt. Es ist zu erkennen, daß der Deckel 51 im Querschnitt L-förmig ausgebildet ist und die Ladeöffnung 48 sowohl nach oben als auch zur Seite hin abdeckt. Innen in dem Gehäuse 47 ist noch der Drehantrieb 31 angedeutet, der die Endloskette 29 antreibt, an der beispielhaft zwei Werkzeuge 23 und 23' gehalten angedeutet sind. Das Werkzeug 23' kann durch die Ladeöffnung 48 entnommen bzw. wieder eingelegt werden.

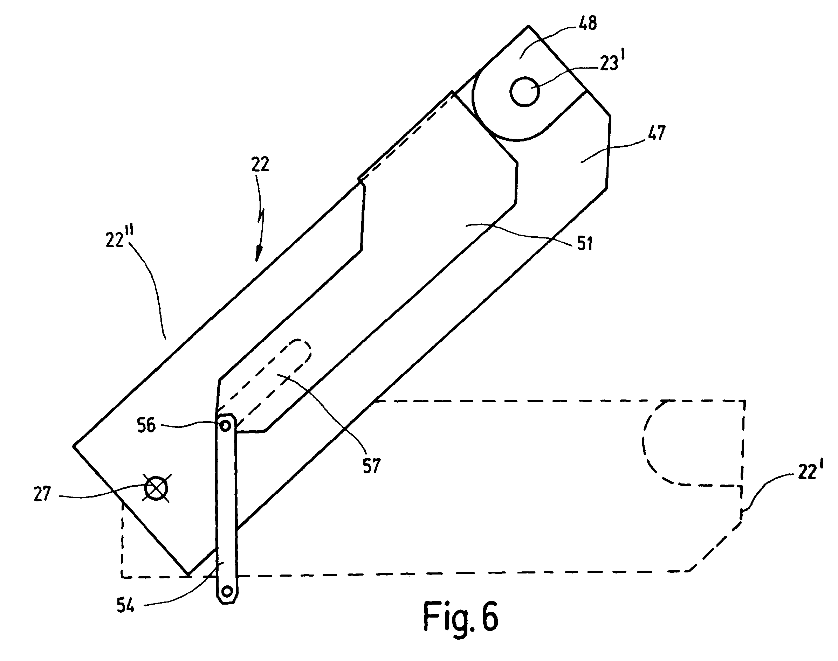

In Fig. 6 ist in einer Ansicht wie Fig. 4 das Maschinenmagazin 22 jetzt in seiner Wechselposition 22'' gezeigt, wobei die Ruheposition 22' gestrichelt angedeutet ist.

Durch das Verschwenken des Maschinenmagazins 22 um die Schwenkachse 27 hat sich der Bolzen 56 in der Kulisse 57 ganz nach links bewegt und dabei den Deckel 51 mitgenommen, so daß dieser jetzt die Ladeöffnung 48 und damit das dort befindliche Werkzeug 23' freigibt. Wird das Maschinenmagazin 22 wieder in die Ruheposition 22' zurückgeschwenkt, klappt der Stab 54 in Fig. 6 wieder nach rechts, wodurch der Deckel 51 die Ladeöffnung 48 wieder verschließt.

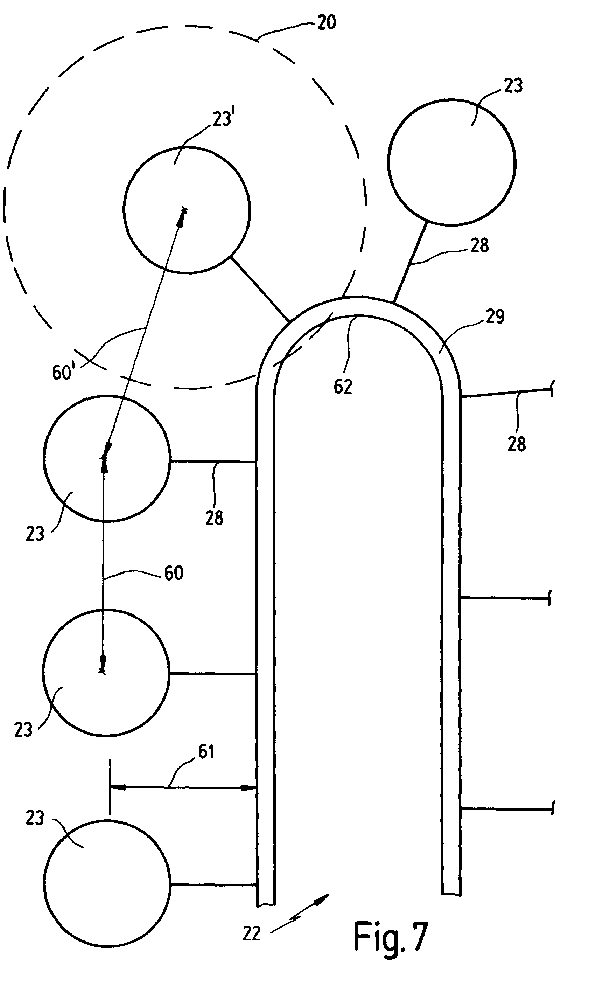

In Fig. 7 ist in einer schematischen Draufsicht das Maschinenmagazin 22 im Bereich der Wechselposition gezeigt, wobei der Durchmesser der Spindel 20 gestrichelt angedeutet ist. Die Träger 28, die lediglich schematisch dargestellt sind, weisen zueinander einen Abstand 60 und zur Endloskette 29 einen Abstand 61 auf, wobei sich aufgrund der kinematischen Gegebenheiten der Abstand 60 vergrößert, wenn die Träger 28 in einen kreisbogenförmigen Abschnitt 62 der Endlosbahn 29 gelangen. Der Abstand 60' ist hier größer als der Abstand 60 außerhalb des kreisbogenförmigen Abstandes, so daß hier die Spindel 20 ein Werkzeug 23' unmittelbar anfahren kann, ohne daß die benachbarten Werkzeuge 23 stören.

Dadurch, daß die Träger 28 nach außen über die Endloskette 29 vorstehen und die Werkzeuge 23 in dem Abstand 61 zu dem Endlosband 29 halten, läßt sich also der einfache Pick-up-Betrieb erreichen; die Spindel 20 kann im Bereich des kreisbogenförmigen Abschnittes 62 das Werkzeug 23' unmittelbar anfahren.

## Patentansprüche

1. Werkzeugmaschine mit einem Werkstücktisch (11) zum Aufspannen von zu bearbeitenden Werkstücken (14), einer in einem Arbeitsbereich (32) relativ zu dem Werkstücktisch verfahrbaren Spindel (20), in die Werkzeuge (23) für die Bearbeitung der Werkstücke (14) einwechselbar sind, und einem Maschinenmagazin (22), in dem in die Spindel (20) einwechselbare Werkzeuge (23) gehalten sind,
dadurch gekennzeichnet, daß das Maschinenmagazin (22) zum Werkzeugwechsel in den Arbeitsbereich (32) hinein bewegbar ist, so daß ein in dem Maschinenmagazin (22) gehaltenes Werkzeug (23') durch die Spindel (20) entnehmbar ist.

2. Werkzeugmaschine nach Anspruch 1, dadurch gekennzeichnet, daß das Maschinenmagazin (22) mit einem eigenen Gehäuse (47) versehen ist, das eine Ladeöffnung (48) aufweist, durch die hindurch die Spindel (20) ein Werkzeug (23') aufnehmen und ablegen kann.

3. Werkzeugmaschine nach Anspruch 2, dadurch gekennzeichnet, daß ein Deckel (51) für die Ladeöffnung (48) vorgesehen ist, der die Ladeöffnung (48) beim Hineinfahren in den Arbeitsbereich (32) vorzugsweise automatisch freigibt.

4. Werkzeugmaschine nach Anspruch 3, dadurch gekennzeichnet, daß der Deckel (51) verschiebbar an dem Gehäuse (47) angeordnet und gelenkig mit einem Ende eines Stabes (54) verbunden ist, der an seinem anderen Ende gelenkig mit einem Gestell (15) der Werkzeugmaschine (10) verbunden ist.

5. Werkzeugmaschine nach Anspruch 3 oder 4, dadurch gekennzeichnet, daß an den Deckel (51) ein Bolzen (56) angeordnet ist, der in einer Kulisse (57) läuft.

6. Werkzeugmaschine nach einem der Ansprüche 1 bis 5, dadurch gekennzeichnet, daß die Werkzeuge (23) in dem Maschinenmagazin (22) längs einer in sich geschlossenen Bahn mittels eines eigenen Antriebes (31) verfahrbar sind.

7. Werkzeugmaschine nach einem der Ansprüche 1 bis 6, dadurch gekennzeichnet, daß das Maschinenmagazin (22) schwenkbar an einem Gestell (15) der Werkzeugmaschine (10) gelagert und mit einem Schwenkantrieb, vorzugsweise einer Kolben-Zylinder-Einheit (24), versehen ist.

8. Werkzeugmaschine nach einem der Ansprüche 1 bis 7, dadurch gekennzeichnet, daß das Maschinenmagazin (22) ein angetriebenes Endlosband (29) aufweist, an dem Träger (28) zur Aufnahme der Werkzeuge (23) angeordnet sind.

9. Werkzeugmaschine nach Anspruch 8, dadurch gekennzeichnet, daß jeder Träger (28) zwei im Abstand parallel zueinander verlaufende Ausleger (38) aufweist, an denen eine Vertiefung (42) vorgesehen ist, die an eine Außenkontur (43) des Werkzeuges (23) so angepaßt ist, daß dieses nach dem Ablegen nicht seitlich herausfallen kann.

10. Werkzeugmaschine nach Anspruch 8 oder 9, dadurch gekennzeichnet, daß die Träger (28) nach außen über das Endlosband (29) vorstehen und die Werkzeuge (23) in einem Abstand (61) zu dem Endlosband (29) halten.

11. Werkzeugmaschine nach Anspruch 10, dadurch gekennzeichnet, daß an einem kreisbogenförmigen Abschnitt (62) des Endlosbandes (29) eine Wechselposition vorgesehen ist, in der ein Werkzeug (23') durch die Spindel (20) entnehmbar ist.
